# EUROPEAN PATENT APPLICATION

(11) **EP 0 562 334 A2**
(43) Date of publication of application: **29.09.1993**
(21) Application number: 93103588.5
(22) Date of filing: 05.03.1993
(51) Int. Cl.: G06F 15/20

(54) **Computer system and method for the automated analysis of texts**

(30) Priority: 21.03.1992 DE 4209280
(71) Applicant: INTERNATIONAL BUSINESS MACHINES CORPORATION, Armonk, N.Y. 10504 (US)
(72) Inventor: Zoeppritz, Magdalena, W-6915 Dossenheim (DE)
(74) Representative: Schäfer, Wolfgang, Dipl.-Ing.

(57) **Abstract**

The invention concerns a computer system for the automated analysis of texts composed of natural language words. The memory of a computer system stores the stems (110) of natural language verbs along with the associated paradigms (111) and endings (112). With the aid of the paradigms and endings, the various forms of the associated verb may be derived from the stem. During the analysis of a text, the stem of a verb occurring therein is looked up in the memory of the computer system. A comparison of the verb to be analyzed with the associated paradigms and endings yields the different verb forms with regard to person and tense. During the analysis of further words of the text, these different forms are considered. As a result, the decision as to which form is the correct one may be delayed for as long as possible. Multiple analysis is eliminated, thus reducing the time required for text analysis.

## Description

The invention concerns a computer system for the automated analysis of texts composed of natural language words, as well as a method for the automated analysis of such texts by means of a computer sytem.

A trend in the general development of computer systems has been to simplify the user/computer interface. Past examples of this are the provision of a "mouse" or the development of what is known as touch screens for user entries. Speech recognition by computer systems is another alternative for simplifying user entries in such systems. For this purpose, the words uttered by the user are converted into electric signals and then processed and detected by the computer system. In the computer system, the detected words may be processed further as instructions.

This necessitates however that the words uttered by the user are correctly detected and interpreted by the computer system. Thus, it is possible, for example, that the computer system recognizes the words "der", "gefangene" and "floh" following each other as such, but that the words thus recognized are not sufficient for it to determine whether they constitute a sentence "der Gefangene floh" or are part of a sentence "der gefangene Floh...". For this purpose the text, i.e., both the individual words and the context in which they are used have to be analyzed.

Such text analysis is also required if, for example, a text processing system is to correct not only pure spelling errors but also other errors, such as the spelling of "daß" and "das" which may differ depending upon the respective context. Finally, it is essential for a system for automatically translating text from a source into a target language to understand the text of the source language before translating it into the target language.

As previously mentioned, automated text analysis does not only serve to consider the individual words, for example of a sentence, one by one but also the context in which they appear. As has also been previously mentioned, it is essential for speech recognition or text translation that the computer is able to determine, for example, whether a verb in a sentence is is used in the present or simple past (imperfect) or in the singular or plural, etc. This is illustrated by the two sentences "Er wollte nach Hause gehen." and "Er sagt, er wollte nach Hause gehen.". Both sentences contain the verb "wollte". The first sentence uses the third person singular simple past indicative form of the verb and the second sentence its third person singular simple past subjunctive form. These different forms of the verb "wollte" are detected by sentence analysis. It is only then that the computer system is able to process or translate the sentences correctly.

One approach for carrying out such automated analysis of texts by means of a computer system is to provide for all possible words to be stored along with all different word forms, or the like, in the memory of the computer system. During analysis, the individual words of the text are compared with the stored words to determine whether a match exists. Any matches are then successively processed as potential candidates. This yields a decision tree which may have a plurality of branches or be arbitrarily complex even for normal sentences. This means that, even for those sentences, the processing time is very long. Realtime processing, as required, for instance, for speech recognition, is no longer possible. In addition, the large number of words to be stored requires an extensive memory, which has meant so far that automated analysis could only be performed on large computer systems.

It is the object of the present invention to improve the known computer systems and methods for automated text analysis in particular with regard to their processing speed.

This object is accomplished according to the invention in that a computer system of the above-described kind stores the common stem of particular words once, and that for each stem paradigms (morphological items of information) and endings are stored.

For a method of the previously described kind this object is accomplished in that the words are compared with a plurality of stored stems and with their respective associated stored paradigms and endings.

Thus, not all words are stored in the memory of the computer system but only common stems of particular related words which are stored once in each case. This measure alone noticeably reduces the storage space required. The paradigms and endings stored for the individual stems ensure that each stem is maintained in all its connotations and may be considered by the computer system.

Further storage space may be saved by storing the paradigms and endings in the form of different codes such that the individual codes and the paradigms and endings are associated with each other in the form of stored tables.

It is particularly advantageous to store the stems associated with the verbs in the memory of the computer system. In this case the paradigm of the verb may be composed of the stem as applicable to predetermined tenses and persons. Similarly, the endings may be composed of the changes to be added to the stem for all tenses and persons of the respective verb.

As previously mentioned, by storing the stem and the associated paradigms and endings, words can be analyzed in all their connotations. For this purpose, the computer system compares the words to be analyzed with the stored stems and the associated stored paradigms and endings during analysis. A significantly increased processing speed is obtained by merely limiting the comparison to stems in a first step.

In addition, the method for automated text analysis by means of a computer system operates such that the associated paradigms and endings do not have to be considered immediately after a matching stem has been found but that this may be done at a later stage of the analysis. Thus, similar to variables, the paradigms and endings may accompany the further analysis. As a result, the previously mentioned decision tree has much fewer branches so that the processing time is substantially reduced, which is tantamount to an increase in the processing speed.

All in all, the invention constitutes a significant contribution to the realtime analysis of texts by means of a computer system. In addition, the invention significantly reduces the storage space required for such automated text analysis, so that analyses of this kind may also be carried out on smaller computer systems.

Further developments of the invention may be seen from the patent claims and are explained below by way of examples illustrated in the figures, in which
- Fig. 1: shows an excerpt from the memory of a computer system for automated text analysis;
- Fig. 2: shows a table of potential paradigms of stems stored in the memory, and
- Fig. 3: shows a table of potential endings of stems in the memory.

The following description assumes that a particular text is to be analyzed by a computer system. The text is composed of natural language words and entered into the computer system, for example, as speech input or by means of a keyboard. As previously explained, such automated text analysis necessitates comparing the words of the text with any possible stored natural language words. This in turn necessitates storing a dictionary of the natural language concerned in the memory of the computer system.

If the natural language is German or another apophonic language, its verbs occur in a multitude of forms. This is illustrated below by means of the German verb "backen": 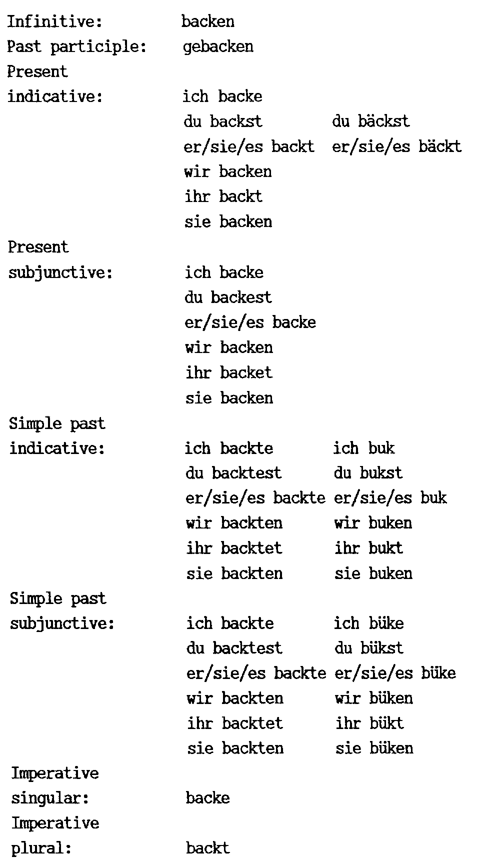
As may be seen, the verb "backen" invariably occurs with the stem "back" and particular tense- and person-dependent endings. There are three exceptions to this rule for the verb "backen", namely the stem "bäck" with the corresponding endings in the second and the third person present indicative form, the stem "buk" with the associated endings for the individual persons of the simple past indicative, as well as the stem "bük" with the associated endings for the individual persons of the simple past subjunctive.

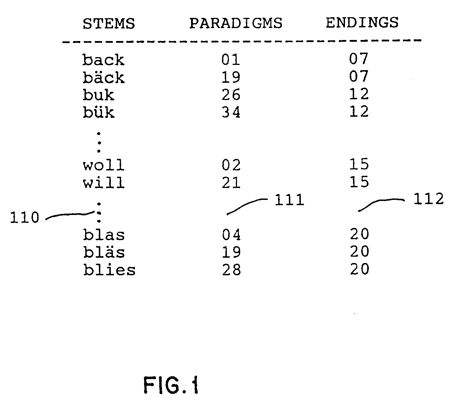

Fig. 1 shows an excerpt from the memory of a computer system. The first column 110 of Fig. 1 indicates the individual stems, the second column 111 the respective associated paradigms, and the third column 112 the associated endings. Fig. 1 contains only codes for the paradigms and the endings. These codes may be general identifications consisting of several components, which may also be directly recorded in the dictionary.

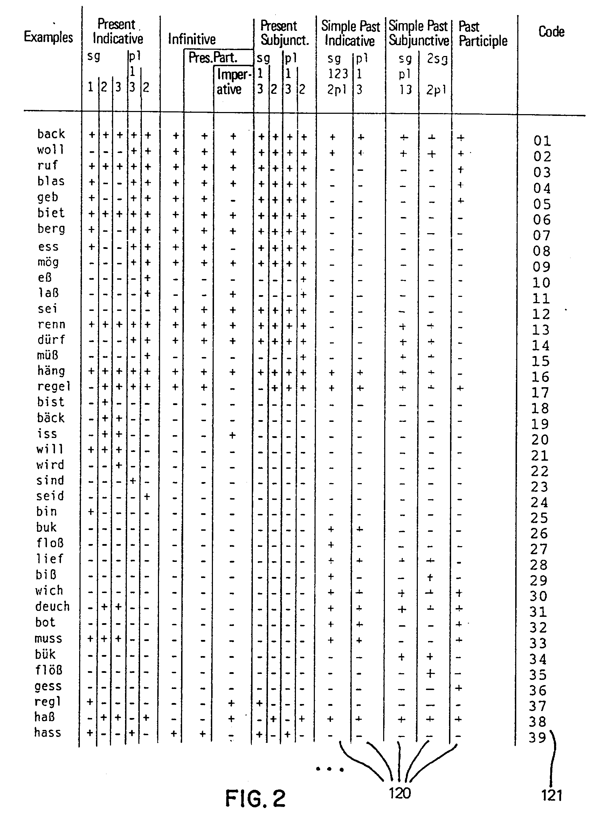

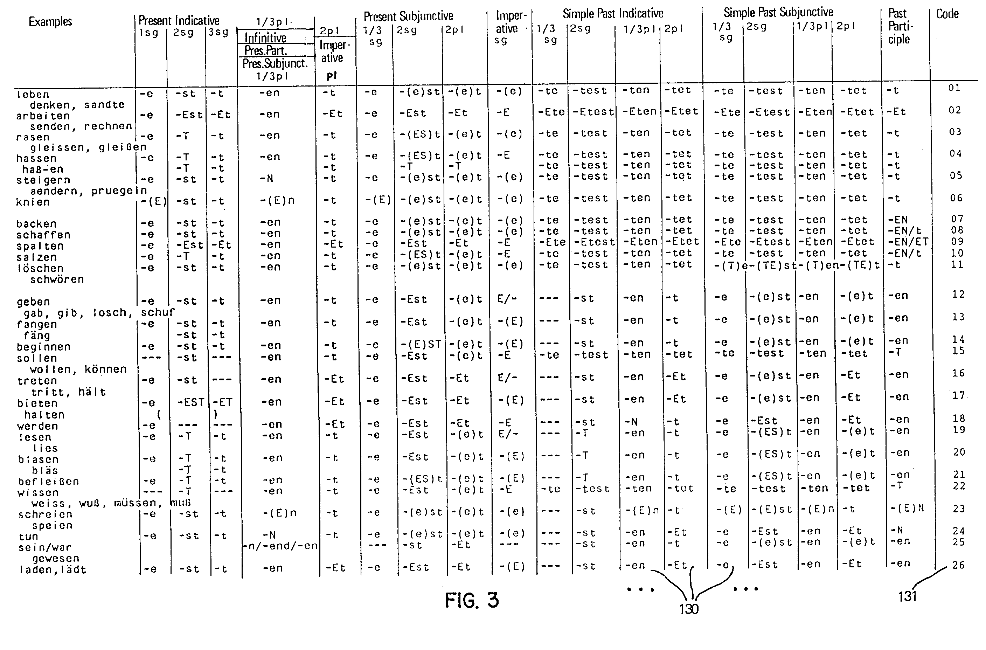

The paradigms and endings associated with the codes are illustrated in Figs. 2 and 3. Fig. 2 shows a table containing the paradigms in columns 120 and the associated codes for the content in column 121, whereas Fig. 3 shows a table listing the endings in columns 130 and the associated codes in column 131. The tables of Figs. 2 and 3 along with the codes, but without examples, are also stored in the memory of the computer system.

It is evident from Fig. 1 that not all the forms of the German verb "backen" are stored in the memory of the computer system but only one stem with the associated paradigm and endings. For the German verb "backen", the first information stored in the memory of the computer system is only the stem "back" with the paradigm 01 and the endings 07. With regard to the paradigm 01, the table of Fig. 2 shows that the stem "back" is shared by all possible forms of the verb "backen". The line for the endings 07 in Fig. 3 shows the endings to be added to individual forms of the verb "backen". It will be found that all the above-described forms of the verb "backen" containing the stem "back" are derivable from this stem and the associated endings of Fig. 3.

As previously mentioned, there are also exceptions to the verb "backen", such as "du bäckst" and "er/sie/es bäckt". These exceptions are stored according to Fig. 1 in the memory of the computer system by means of the stem "bäck", the associated paradigm 19 and the associated endings 07. Paradigm 19 shows that the stem "bäck" applies only to the second and the third person present indicative. Paradigm 19 thus limits the stem "bäck" to these two forms of the verb "backen". The table of Fig. 3 with the endings 07 shows that in the second person present indicative an "st" is suffixed to the stem "bäck", whereas in the third person singular present indicative a "t" is suffixed to the stem. It will be noted that since paradigm 19 is limited to the second and the third person singular present indicative form, only these two endings of Fig. 3 are relevant. Thus, the above-described exceptions "du bäckst" and "er/sie/es bäckt" result from the table of Figs. 2 and 3 and the stem "bäck".

As has also been previously mentioned, a further exception to the verb "backen" may apply to all persons of the simple past indicative. According to Fig. 1 this is stored in the form of the stem "buk", the associated paradigm 26 and the associated endings 12 in the memory of the computer system. The table of Fig. 2 shows that the stem "buk" according to paradigm 26 applies only to simple past indicative forms. The endings 12 of the table in Fig. 3 show that no ending may be attached to the stem "buk" in the first and the third person singular simple past indicative, but that in the second person singular, the first and the third person plural, and the second person plural simple past indicative the stem must be suffixed by the endings "st", "en", "t". This yields the forms "ich buk", "du bukst", "er/sie/es buk", "wir buken", "ihr bukt", and "sie buken", as previously indicated. It is pointed out that because of paradigm 26 only the endings 12 of the simple past indicative of the stem "buk" are relevant.

This applies analagously to the stem "bük" which is associated according to Fig. 1 with paradigm 34 and the endings 12.

Thus, all the persons and tenses of the verb "backen" are derivable by the computer system from the stored stems "back", "bäck", "buk", and "bük" and the associated paradigms and endings.

This analogously applies to the German verbs "wollen" and "blasen", whose stems "woll", "will", "blas", "bläs", and "blies" along with the associated paradigms and endings according to Fig. 1 are likewise stored in the memory of the computer system.

The relevant stems of all German language verbs, for example, are stored in this manner in the memory of the computer system. In the German language it has been found that for storing all its verbs it is sufficient to distinguish between 39 different paradigms and 26 sets of endings. By associating one paradigm and one set of endings with one stem in each case it is possible to derive all verb forms from the stems.

Needless to say other kinds of words, such as nouns or adjectives, may also be stored in this manner in the computer system. It is obvious that this approach of storing stems, paradigms and endings is not only suitable for the German language but may also be used for other, in particular apophonic, languages. In this way the entire dictionary of a natural language may be stored in the memory of a computer system.

For analyzing a particular text, the computer system uses a resident dictionary. This will be explained in detail below with reference to the two afore-mentioned sentences "Er wollte nach Hause gehen" and "Er sagte, er wollte nach Hause gehen."

Both sentences contain the word "wollte". In the first sentence it appears in the third person singular simple past indicative and in the second sentence in the third person singular simple past subjective. This difference is not recognizable by the computer system from the word "wollte" but only from the context in which this word is used with others in a sentence.

For this purpose, the computer system determines the stem "woll" of the word "wollte" in a first step. Then it looks up the stem "woll" in its memory and finds, according to Fig. 1, the paradigm 02 and the endings 15. From the table of Fig. 2 also stored in its memory, the computer system knows that the stem "woll" according to paradigm 02 applies to all forms of the verb "wollen", except for the first, the second and the third person singular present indicative. From the table of Fig. 3 stored in its memory the computer system takes the endings 15 to be suffixed to the stem "woll" to form the respective forms of the verb "wollen".

As can be seen, the word "wollte" is made up of the stem "woll" and the ending "te". This ending "te" exists twice according to the endings 15 of the table of Fig. 3, namely, in the first and the third person singular simple past indicative and in the first and the third person singular simple past subjunctive. This indicates to the computer system that the word "wollte" may occur either in the first or the third person singular simple past indicative form or in the first or the third person singular simple past subjunctive form. For the further analysis of the two sentences by the computer system these two forms are used similar to variables. In this manner, both forms may be considered. It is only after the computer system has obtained further information not compatible with either of these forms during analysis that it opts for the agreed form and continues its analysis with only that form. The decision tree includes both forms in the form of a line until a decision is possible at a later stage.

In the present example of the two sentences a decision is possible when the computer system determines during further analysis that the first sentence "Er wollte nach Hause gehen." is a simple main clause, whereas the second sentence "Er sagte, er wollte nach Hause gehen." is a subordinate clause in indirect speech.

In the case of the second sentence the computer system determines that the word "wollte", contained in the subordinate clause in indirect speech must occur in the subjunctive. Thus, the word "wollte" in the second second sentence matches the second form, namely the first or the third person singular simple past subjunctive. As the first sentence contains no such characteristics, the word "wollte" corresponds to the first form, namely the first or the third person singular simple past indicative. From the word "Er" in both sentences the computer knows that the third person is concerned.

When the second sentence "Er sagt, er wollte nach Hause gehen." is presented for analysis, the computer system derives the two afore-mentioned forms by means of the stem "woll", the paradigm 02 and the endings 15 from the tables of Figs. 2 and 3. On the basis of further information, in particular the fact that the second sentence contains indirect speech, the computer system decides at a later stage which of the two forms is the correct one.

When, on the other hand, the first sentence "Er wollte nach Hause gehen." is presented for analysis, the computer system also derives the two afore-mentioned forms by means of the stem, the paradigm and the endings from the tables of Figs. 2 and 3. After the computer system has determined that the first sentence is a normal main clause it is able to opt for the correct one of the two forms.

Thus analysis is carried out only once and considers and processes the different forms. Multiple analysis with each individual form is not required.

## Claims

1. Computer system for the automated analysis of texts composed of natural language words,
characterized in that
the common stem of particular words is stored once, and that for each stem paradigms and endings are stored (Fig. 1).

2. Computer system as claimed in claim 1,
characterized in that
the paradigms and the endings are stored in each case in the form of a code.

3. Computer system as claimed in claim 2,
characterized in that
tables are stored for associating the codes with the paradigms and endings.

4. Computer system as claimed in any one of the claims 1 to 3,
characterized in that
each stem is associated with one of the paradigms (Fig. 2).

5. Computer system as claimed in any one of the claims 1 to 4,
characterized in that
each stem is associated with a set of endings (Fig. 3).

6. Computer system as claimed in any one of the claims 1 to 5,
characterized in that
the stems associated with the verbs are stored once.

7. Computer system as claimed in claim 6,
characterized in that
the paradigms are composed of the stem as applicable to particular tenses and persons of the respective verb.

8. Computer system as claimed in claim 6 or 7,
characterized in that
the endings are composed of the endings suffixed to the stem for the various tenses and persons of the respective verb.

9. Computer system as claimed in any one of the claims 1 to 8,
characterized by
its use in conjunction with speech recognition, text correction/processing or text translation.

10. Method for the automated analysis of texts composed of natural language words by means of a computer system,
characterized in that
the words are compared with a plurality of stored stems and with the respective associated stored paradigms and endings.

11. Method as claimed in claim 10,
characterized in that
in response to a single match of a word with one of the stored stems, the asscociated stored paradigms and the associated stored endings, further information concerning the word is derived from these paradigms and endings.

12. Method as claimed in claim 10,
characterized in that
in response to several matches of a word with one of the stored stems, the associated paradigms and the associated stored endings, further information concerning the existing word is obtained by analyzing further words.
